Europäisches Patentamt

European Patent Office

Office européen des brevets

(19)

(11) EP 0 438 884 B1

(12) EUROPEAN PATENT SPECIFICATION

(45) Date of publication and mention
of the grant of the patent:
**07.02.1996  Bulletin 1996/06**

(51) Int Cl.6: **H02P 9/30**, H02J 7/24

(21) Application number: **90313576.2**

(22) Date of filing: **13.12.1990**

(54) **Control apparatus for electric generator**

Regelgerät für einen elektrischen Generator

Appareil de contrôle pour générateur électrique

(84) Designated Contracting States:
**DE GB**

(30) Priority: **17.01.1990 JP 6123/90**

(43) Date of publication of application:
**31.07.1991   Bulletin 1991/31**

(73) Proprietor: **HITACHI, LTD.**
**Chiyoda-ku, Tokyo 100 (JP)**

(72) Inventors:
• **Marumoto, Katsuji,**
**c/o Hitachi Research Laboratory**
**Hitachi-shi, Ibaraki (JP)**
• **Miyashita, Kunio,**
**c/o Hitachi Research Laboratory**
**Hitachi-shi, Ibaraki (JP)**
• **Tahara, Kazuo,**
**c/o Hitachi Research Laboratory**
**Hitachi-shi, Ibaraki (JP)**

• **Mashino, Keiicho,**
**c/o Sawa Works of Hitachi, Ltd.**
**Katsuta-shi, Ibaraki (JP)**
• **Kanke,Atsushi,**
**c/o Hitachi Research Laboratory**
**Hitachi-shi, Ibaraki (JP)**
• **Saito, Akihiro, c/o Sawa Works of Hitachi, Ltd.**
**Katsuta-shi, Ibaraki (JP)**

(74) Representative: **Molyneaux, Martyn William et al**
**London WC1V 6RR (GB)**

(56) References cited:
**EP-A- 0 106 539**          **EP-A- 0 289 608**
**GB-A- 2 013 377**

• **PATENT ABSTRACTS OF JAPAN vol. 10, no.
367 (E-462)(2424) 09 December 1986, & JP-A-
61 161999**
• **TECHNISCHE MITTEILUNGEN AEG
TELEFUNKEN. vol. 68, no. 1/2, April 1978,
BERLIN DE pages 57 - 66; R. GERLACH:
"Stromrichterregung für schnellaufende
Synchrongeneratoren"**
• **PATENT ABSTRACTS OF JAPAN vol. 8, no. 185
(E-262)(1622) 24 August 1984, & JP-A-59
076198**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### Background of the Invention

#### a) Field of the Invention

This invention relates to a control device for an electric generator (such as an alternator) for use with a vehicle engine. In preferred embodiments, this invention relates to a control device in which a generator field winding current is controlled in response to an electric load condition or, when used with an automobile, to an operating condition of the automobile.

#### b) Description of Related Art

It is known from JP-A-59-76198 (1984) to provide a control device for an electric generator in which the field current is controlled so that the output voltage of the generator reaches a target voltage determined in response to a load.

Further, JP-A-55-29222 (1980) discloses detecting the field current of a generator and controlling the field current to reach a predetermined value.

It is also known from JP-A-59-83600 (1984) that during a sudden load change a voltage command value may be changed in a step toward a target voltage to change the generator field current also in a step.

Moreover, JP-B-1-56617 discloses the use of a microcomputer to optionally control the power generation condition of a generator in response to, for example, the load condition and the battery condition of a vehicle.

In the above-mentioned JP-A-59-76198 (1984), the field current is controlled in an open-loop manner, but a problem arises in that the variation of the field current due to, for example, the condition of the current supply source and the resistance change of a field coil, is uncontrollable. Namely, there is a problem, in that, even if there is no change in the target voltage, the target voltage cannot be maintained if the field current change due to, for example, a change in the field winding resistance caused by ambient temperature change and increase in field winding temperature.

In the above noted JP-A-55-29222 (1980), although the field current is feedback-controlled, the feedback control is effected so that the output voltage of the generator is always kept at a predetermined value, but such is inapplicable to obtaining output voltage control in response to a load variation. Further, in this reference, because the field current is detected by a current transformer, there is a problem, in that, it is unsuitable for forming the circuit into an integrated circuit (IC).

In JP-A-59-83600 (1984), the control ratio is limited near a practical output voltage value of the generator and a comparatively broad band level of control cannot be obtained. In this respect, this known device is only effective to abruptly change the generator torque, by cutting the generator field current off. Therefore, the problem exists that the torque variation to drive the generator cannot be adequately controlled. Thus, when a large resistance load such as an air-conditioner is switched on, the power required from the generator suddenly increases, resulting in increase in the torque required to drive the generator which, in an automobile, increases the torque requirement from the internal combustion engine. If the engine is running at idling speed, the increase in torque required to drive the generator can stall the engine. In other words, the load increase occurs too suddenly for the fuel-injection system of the engine to react to increase the amount of fuel required to drive the engine to satisfy the torque required to drive the generator. In the prior art reference; the alternator torque is suddenly increased in one step leading to possible stalling of the automobile engine. Further, in this reference and JP-B-1-56617 when power generation is required to be controlled in response to the load condition and the battery condition of a vehicle, there is a problem in that the required control cannot be achieved as required because of internal factors within the disclosed circuits, such as change of the field coil resistance.

GB-A-2013377 discloses a generator for supplying AC and DC loads respectively with the voltage across each load being measured and the generator field current accordingly controlled so as to regulate the output voltage of the generator. If the voltages across the loads are within predetermined first and second ranges, the field current has one value representative of the voltage across one of the loads and this value is changed to a second value representative of the other load if the voltage is not within its predetermined range. EP-A-0106539 discloses a voltage regulating system for a generator that supplies the battery and electrical loads on a motor vehicle and includes a load response control for detecting whenever a substantial electrical load is applied to the generator tending to cause a drop in the generator output voltage. When such a condition is detected, the generator field current is controlled to gradually increase the field current from its prevailing value.

JP-A-61-161999 discloses a vehicle generator in which over-excitation of the generator output terminal voltage is effected by associating a field current control system as a minor loop in a terminal voltage control system and the pre-characterising clause of the subject claim 1 is based upon this document.

The present invention seeks to overcome the foregoing disadvantages.

An object of the present invention is to enable the output voltage of a generator to be controlled over a broad range in response to changing load by feedback-control of the field winding current and so that the field winding current is not affected by the condition of the current supply (battery) source or the resistance change of the field coil.

A further object of a feature of the present invention is to effectively lessen variation in the torque required to drive the generator with variation of load.

Still another object of a further feature of the present invention is to precisely control the field current according to the power generation condition in response to the load condition and the battery condition of the vehicle.

## Summary of the Invention

According to this invention there is provided a control apparatus for an electric generator having an armature winding for providing a rectified output voltage to be applied to a load and a field winding adapted to be driven by rotation of an engine of a vehicle, said apparatus including means for detecting the output voltage, means for comparing the output voltage with a predetermined voltage, converting means for converting the output of said comparing means to a current command value ($I_{FO}$), a chopper for controlling the field current of said field winding, means for detecting the actual current flowing through the field winding ($I_{FF}$), and comparator means for generating a signal indicative of a deviation between said current command value ($I_{FO}$) and said actual current flowing through the field winding ($I_{FF}$) and for applying the deviation signal to pulse width control means for controlling the duty of said chopper to render said deviation to be substantially zero, characterized in that said current command value is a first current command value ($I_{F1}$) and there is further provided means responsive to at least one parameter affecting said field current which comprises at least one of means arranged to determine rotational speed of the field winding, an electrical load responsive circuit and a temperature detection circuit adapted to detect the temperature of the chopper for generating at least one further current command value ($I_{F2}$, $I_{F3}$, $I_{F4}$) and means for selecting between said first and said further current command value ($I_{F1}$ - $I_{F4}$) to provide an input to said comparator means, and in that said load is a battery and means are provided for detecting the actual voltage ($V_{Bd}$) of said battery so that said means for comparing is arranged to compare the actual voltage ($V_{Bd}$) of said battery with said predetermined voltage ($V_{BC}$) and wherein a current feedback loop from the field winding to said pulse width control means, and a voltage feedback loop from the battery to said means for comparing are formed.

Thus, the present invention determines a field current command value in response to a condition of load which is connected to a generator, and based upon this current command value and an actual field current controls a chopper used for field current control.

Advantageously, means are provided for adaptively controlling the output of the deviation determining means on a priority level basis with output signals generated by at least one of a means arranged to determine rotational speed of the field winding, an electrical load responsive circuit and a temperature detection circuit adapted to detect the temperature of the chopper.

Conveniently, during an OFF period of the chopper, the conduction ratio of the chopper is determined based upon the field winding current value immediately before the chopper OFF period.

For achieving the above further object, preferably during a change in load, the command value of the field winding current is gradually brought to a target current and the field current is feedback-controlled based upon the actual field current and the current command value.

Also, for achieving the above still another object, advantageously the command value of the field winding current is obtained in response to the load condition and the battery condition of the vehicle and in response thereto, the field current power generation condition is controlled.

In the present invention the output voltage of the generator is controlled at an optimum output voltage in response to the load requirement even when there are changes due to the condition of the field current supply source and the temperature of the field winding resistance. Namely, when the load changes, in correspondence therewith, the output voltage of the generator is controlled, and when the load does not change but a current variation occurs, the current supplied by the generator is automatically controlled to be maintained at a target value.

In the present invention, the chopper current is detected without using a current transformer so that the current detection circuit may readily be formed into an IC.

In use of the present invention, while carrying out the feedback control for the field current, the field current command value may be gradually changed toward the target current value so that a smooth control over a broad current range from zero to the maximum current value is enabled without abrupt field current change and also irrespective of the amount of field current variation.

Still further, by use of this invention there is no change in the field winding current due to the internal factors in the circuit, so the power generation condition may be precisely controlled in response to the operating condition and the battery condition of a vehicle.

## Brief Description of the Drawings

The invention will now be described, by way of example, with reference to the accompanying drawings in which:-

Figure 1 is a block circuit diagram of a major part of a control device in a charging generator for use with an automobile in accordance with this invention.

Figure 2 is a control block diagram of an entire system of the control device in a charging generator for use with an automobile in accordance with this invention,

Figures 3 to Figure 5 are operating diagrams showing one example of the control operation in the present invention,

Figure 6 is a detailed circuit diagram of the Figure 6 is a detailed circuit diagram of the embodiment illustrated in Figure 1,

Figure 7 is a detailed diagram of the current detection circuit used in the present invention,

Figures 8 to Figure 11 are diagrams for explaining the operation and characteristics of the present invention,

Figure 12 and Figure 13 are graphs for explaining the advantages of the present invention,

Figures 14(a) and (b) are graphical diagrams for explaining the operating principle of the load response control circuit of the present invention,

Figure 15 is a graph for explaining the control operation of the invention,

Figure 16 is a specific circuit diagram of the load response control circuit,

Figure 17 is a diagram showing the relationship between alternator drive torque and number of engine revolutions when using bypassing air quantity as a parameter,

Figure 18 is a diagram for explaining the effect of the load response control circuit,

Figure 19 and Figure 20 are views showing the relationship between the number of revolutions of the generator and the lighting condition of the charge indicating lamp,

Figure 21 shows a S-B terminal changed-over condition and a flickering condition of the charge lamp with regard to S terminal voltage,

Figure 22 shows a terminal changed-over condition, a gate lock condition, and a charge lamp flickering condition with regard to B terminal voltage,

Figure 23 shows a charge indicating lamp flickering condition with regard to gate voltage,

Figure 24 shows lighting and flickering conditions of the charge indicating lamp in different abnormal conditions,

Figure 25 shows a signal inputted to a C terminal as an external signal,

Figure 26 shows controlled condition of the generator capability,

Figure 27 is a functional block diagram showing another embodiment of the control device of this invention in a generator used for vehicles using a microcomputer,

Figure 28 is a block diagram of the control circuit of the same device shown in Figure 27, and

Figure 29 is a control flow chart of the device shown in Figures 27 and 28.

In the Figures like reference numerals denote like parts.

The present invention is explained hereinbelow with regard to an exemplary embodiment applied to the control of an electric generator (alternator) used for an automobile.

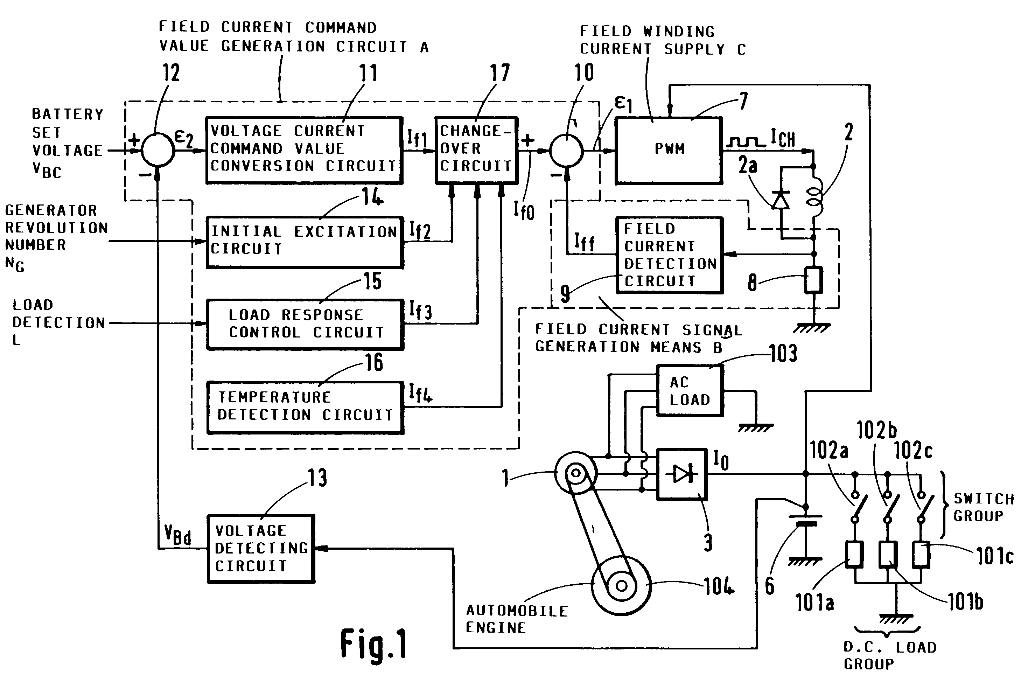

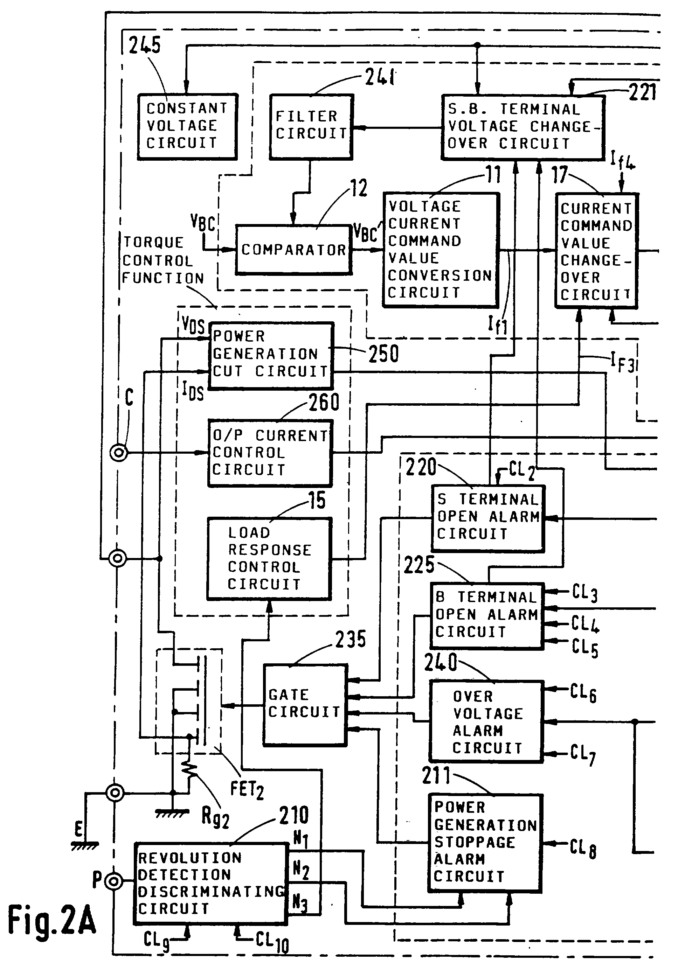

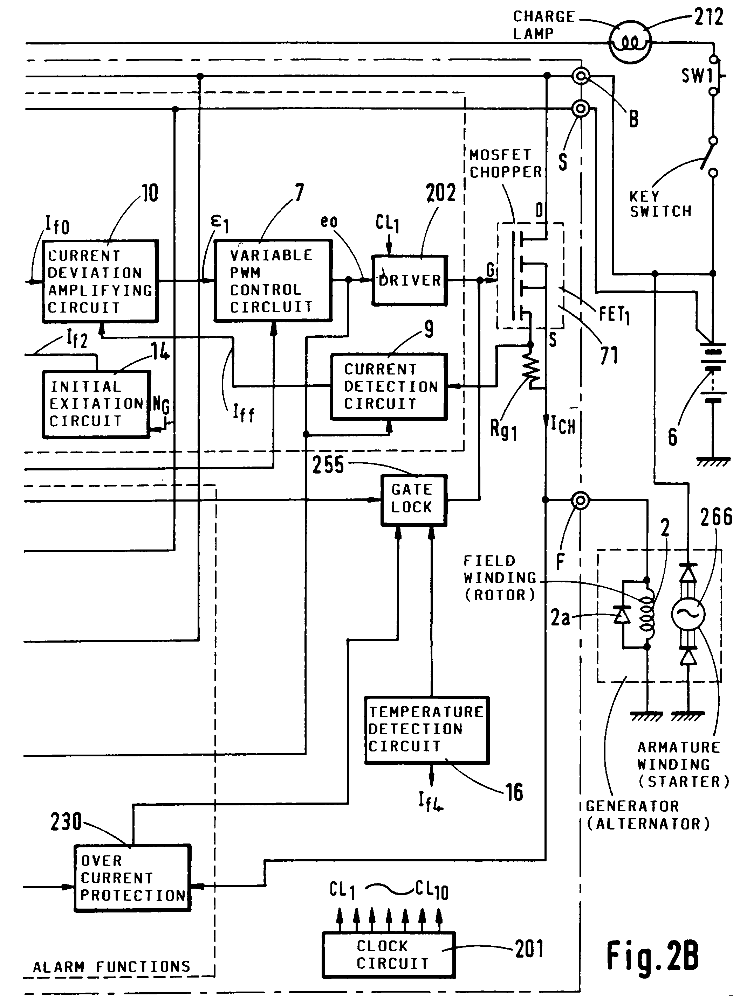

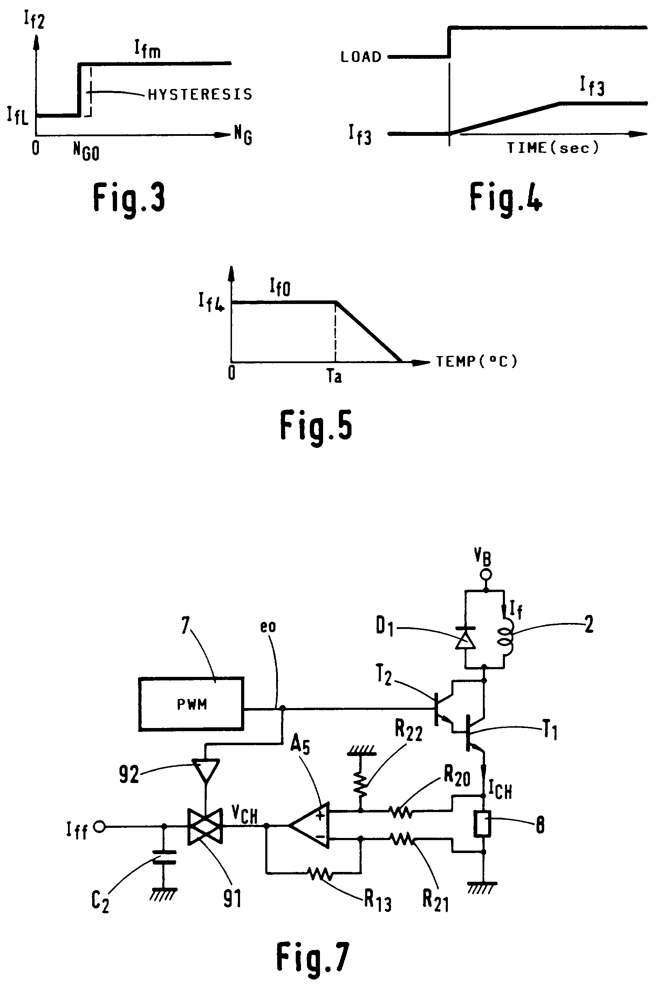

An electric generator 1 shown in Figure 1 for an automobile, has many different kinds of loads connected thereto such as a battery 6, used as a direct current power source, direct current loads 101a, 101b, 101c switched, for example, by respective switches 102a, 102b, 102c for which the battery is a power source and an alternating current load 103 which uses the alternating current output of the generator 1 as a power source. Of course, the battery 6 is itself one of the loads of the generator 1.

Examples of loads 101a, 101b, 101c are an air conditioner, a lighting system, audio apparatus, and an electromagnetic device used for fuel control. Further, a load is sometimes connected to the alternating current output of the generator as a direct power load. An example is a windshield de-frosting system which quickly melts ice formed on the windshield.

The generator 1 is driven by the engine 104 of the automobile and outputs a three phase alternating current. This alternating current is rectified by a rectifier 3 and is supplied to the battery 6.

The generator 1 includes a field winding 2 which is controlled by controlling the current flowing therethrough so that a sufficient output voltage of the generator is obtained in order to maintain the battery voltage at a predetermined value. A flywheel diode 2a is connected in parallel with the field winding 2.

The control of the field winding current will now be explained.

The voltage of the battery 6 is detected by a voltage detecting circuit 13 and a signal $V_{Bd}$ is compared in a comparator 12 with a battery set voltage (14.6±0.25V) $V_{BC}$, the deviation thereof being amplified and outputted as a voltage deviation signal $\varepsilon_2$.

In response to the voltage deviation signal $\varepsilon_2$ a voltage-current instruction value conversion circuit 11 outputs a current command value $I_{f1}$ corresponding to a target field current which is necessary to maintain the battery voltage at a predetermined value.

A change over circuit 17 determines which of a number of current command values $I_{f2}$ - $I_{f4}$ are to be selected and outputted as a target field current command value $I_{f0}$. In this respect the current command values are $I_{f2}$ derived from an initial excitation circuit 14 to be explained herein below, a current command value $I_{f3}$ derived from a load response control circuit 15, or a current command value $I_{f4}$ derived from a temperature detection circuit 16. The changeover circuit 17 is an adaptive controller which will override the current value $I_{f1}$ (determined on the basis of VBC) and select another command value having a higher priority. In this respect, the value selected is not an absolute current value. The value of $I_{f4}$, however, is arranged to take precedence over the values $I_{f1}$ - $I_{f3}$ if the value of $I_{f4}$ is lower than the values of $I_{f1}$ - $I_{f3}$.

A deviation amplifier circuit 10 compares the target current command value $I_{f0}$ with an actual current value signal $I_{ff}$ from a field current detection circuit 9, amplifies the deviation, and outputs a current deviation signal $\varepsilon_1$ as a final current command value.

A field current supply circuit 7 comprising, for example, a Pulse Width Modulation (PWM) control circuit and a Field Effect Transistor (FET) driven by the output thereof, controls the field winding current $I_{CH}$ with a chopper action having a duty period responsive to the current deviation signal $\varepsilon_1$.

The current detection circuit 9 detects the current flowing through a current detection resistor 8 connected in series with the field winding circuit 2, and outputs the constant current signal $I_{ff}$ in response to the detection current.

There are two kinds of current sources for the field current, one a direct current rectified through the rectifier 3, and the other a direct current from the battery 6; in a normal operation, the field winding is self-excited by the output current from the rectifier 3. However, when starting the engine, for example, since the number of revolutions $N_G$ of the generator is low and an insufficient generation current is obtained, at this instant current is supplied from the battery.

The initial excitation circuit 14 has the function of setting the present current command value $I_{fm}$ at $I_{fL}$ so as to reduce the field current $I_{f2}$ to a minimum necessary value as shown in Figure 3 when the number of the engine revolutions is below a predetermined value $N_{GO}$ and the driving torque required to turn the generator heavily loads the engine. The effect of hysteresis is shown in broken lines.

A load response circuit 15 detects the turn-on of a load by the sudden change of the battery voltage, and when the number of engine revolutions is low such as during idling, the circuit 15 outputs a ramp shaped current command value $I_{f3}$ in which the current command value is gradually increased up to the target current command value in 2 ~ 3 seconds, as shown in Figure 4.

A temperature detection circuit 16 detects the temperature of the semiconductor switching element used for a MOSFET chopper 71 shown in Figure 2, and when the temperature on the surface of the integrated circuit mounting the MOSFET exceeds a predetermined value Ta, (e.g. 150°C), outputs a command value $I_{f4}$ for decreasing the current command value $I_{fm}$ in response to the increase in temperature, as shown in Figure 5. Also, if $I_{f4}$ drops below $I_{f0}$ then the changeover circuit 17 switches to control $I_{f4}$. If $I_{f4}$ falls to zero amps (say about 175°C) then the generator is switched off for self-protection.

The fundamental concept of the present invention will now be explained.

A field winding current command value generation means A generates a field current command value $\varepsilon_1$ based upon a current command signal $I_{f0}$ in response to the voltage deviation $\varepsilon_2$ between the battery voltage $V_{Bd}$ and the predetermined set voltage $V_{Bc}$ and a signal $I_{ff}$ from a field current signal generation means B, and based upon this field current command value $\varepsilon_1$ a predetermined current is supplied to the field winding from a field winding current supply means C.

When the battery voltage reduces due to the turn-on of one or more of the loads connected to the battery, the current command value $\varepsilon_1$ correspondingly increases to increase the field winding current $I_{CH}$. As a result, the output voltage of the generator is increased to charge the battery up to a predetermined voltage.

By virtue of such control, if the temperature of the field winding rises causing the resistance value thereof to increase under the influence of the temperature, the field current is reduced.

When the field current $I_f$ tends to decrease, however, the current command value $I_{f0}$ increases due to $V_{Bd}$ decreasing which causes $\varepsilon_2$ to increase and hence $I_{f0}$ to increase and automatically increase the supply current $I_{CH}$ so that the generator output does not change even if the resistance value of the field winding increases and the output in response to the requirement of the load (including the battery) is maintained.

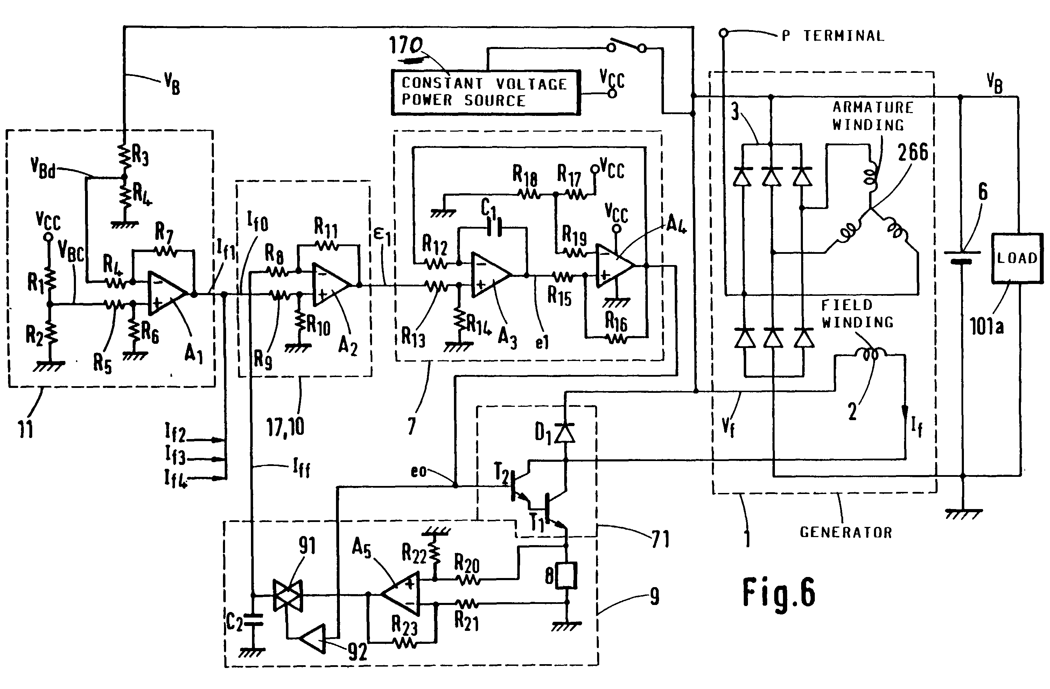

Referring to Figure 6, the chopper 71 has switching elements such as power transistors T1, T2 and FETs (not shown) which switch-control current flowing through the field winding 2, and the constant voltage power source unit 17 supplies the power source voltage $V_{cc}$ to the various control circuits, the other parts being as shown in Figure 1. In the voltage-current command value conversion circuit 11, $R_1$ and $R_2$ are divider resistors which divide the output power source voltage $V_{cc}$ of the constant voltage power source circuit 17 and output a set value $V_{BC}$ of the charging voltage for the battery 6. $R_3$ and $R_4$ are input divider resistors which feed-back battery voltage $V_B$. An operation amplifier $A_1$, includes input resistors $R_4$ to $R_6$ and a feedback resistor $R_i$, and constitutes the comparator 12 and command value conversion circuit 11. In the changeover circuit 17 and deviation amplifier 10 is an operation amplifier $A_2$ which includes input resistors $R_8$, $R_9$ and $R_{10}$ and a feedback resistor $R_{11}$, the deviation amplifier 10 calculating the deviation between the command value $I_{f0}$ which is selected among the current command $I_{f1}$ from the voltage-current command value conversion circuit 11 and command values $I_{f2}$, $I_{f3}$, and $I_{f4}$ and the output $I_{ff}$ of the field current detection circuit 9. In the field winding current supply circuit 7 an operational amplifier $A_3$ constitutes an integrator having input resistors $R_{12}$, $R_{13}$, and $R_{14}$, and a feedback capacitor $C_1$ so as to integrate the input voltage and an adding and subtraction operation is performed between the input signal $\varepsilon_1$ applied through the input resistor $R_{13}$ and the voltage applied through the other input resistor $R_{12}$. The output el of the integrator is applied to the positive terminal of an operational amplifier $A_4$ through an input resistor 15 and the output e0 of amplifier $A_4$ is fed back to the positive terminal thereof through a feedback resistor $R_{16}$ to constitute a comparator having hysteresis. The operating level of this comparator $A_4$ is provided by an input resistor $R_{19}$ after dividing the power source voltage $V_{cc}$ with divider resistors $R_{17}$ and $R_{18}$. By virtue of the combination of the integrator and the comparator when the output eo of the comparator is fed back to the input of the integrator, the integrator operates as a self-exciting oscillator outputting a rectangular wave. Thus, a PWM control circuit is formed in which the duty cycle changes in proportion to the input voltage $\varepsilon_1$.

The chopper circuit 71 is composed of a power transistor $T_1$ and driver transistor $T_2$ as switching elements, a flywheel diode $D_1$, and the shunt resistor 8 is used for current detection of the power transistor $T_1$. The circuit 71 switchingly controls the current $I_f$ flowing through the field winding 2 with the output signal eo from the PWM control circuit of the field winding current supply circuit 7. Instead of using power transistor $T_1$ and driver transistor $T_2$ as switching elements, FET's may be employed.

In the field current detection circuit 9, $A_5$ is an operational amplifier which includes input resistors $R_{20} \sim R_{22}$ and a feedback resistor $R_{23}$. An analogue switch 91 is driven by the output of the circuit 7 through a buffer amplifier 92, and $C_2$ is a capacitor used for holding the output voltage.

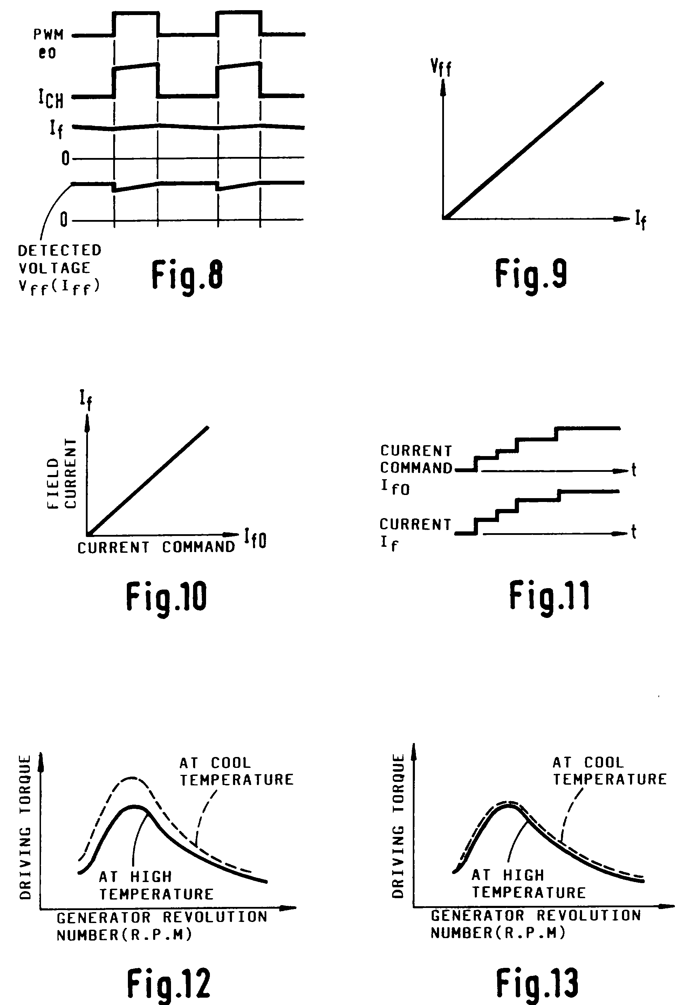

The operation of the respective portions of the above circuit will now be explained referring to Figure 7 which shows the current detection circuit, and Figure 8 shows operating waveforms at respective portions thereof. Current detection with the current detection circuit is carried out by detecting the current $I_{CH}$ of the power element which is an intermittent (chopped) current as shown in Figure 8.

The chopper current $I_{CH}$ is detected through the shunt resistor 8 and amplified by the operational amplifier $A_5$ to form a signal $V_{CH}$. The chopper detected signal $V_{CH}$ is sample-held by the circuit consisting of the analogue switch 91 and the holding capacitor $C_2$ and converted into a simulated field current signal $V_{ff}$.

In more detail, the analogue switch 91 is turned OFF in synchronism with the PWM signal eo of the output from the PWM control circuit 7, and the chopper current $I_{CH}$ immediately before the chopper is turned OFF is held by capacitor $C_2$, and the detected signal at this moment is used as the signal $V_{ff}$. Such holding of the chopper current is required since otherwise the circuit would be unstable due to $I_{CH}$ being a pulsed current from the MOSFET source terminal. Further, during the chopper ON period the analogue switch 91 is turned ON and the detected signal $V_{CH}$ of the chopper current $I_{CH}$ is used as the signal $V_{ff}$. The ON and OFF operation of the analogue switch 91 is carried out with the above PWM control signal eo through the buffer 92.

By virtue of the above operation, the waveform of the simulated field current detection voltage $V_{ff}$ which is obtained from the chopper current is an operating waveform which substantially approximates to the field current $I_f$ and is uninterupted, as shown in Figure 8. As a result, the field current detection circuit exhibits a static characteristic having a good linear characteristic as shown in Figure 9 of $V_{ff}$ against $I_f$, and can detect the field current over a broad range from a small field current to a large field current. Further, since the circuit necessitates no isolation detector, an inexpensive current detector is formed.

Next, the current control operation will be explained. Reverting to Figure 6, the PWM control circuit 7 is for PWM controlling the chopper 71 and includes the amplifier $A_3$, the integrator comprising capacitor $C_1$ and resistor $R_{12}$ and the comparator having hysteresis in which the output of amplifier $A_4$ is positively fed back through the resistor $R_{16}$. Further, by feeding back the output eo of the comparator $A_4$ to the integration resistor $R_{12}$, a PWM control circuit capable of the duty control is obtained. The above PWM control circuit has the function in which the conduction rate or duty of the output signal eo with regard to an input signal (voltage) $\varepsilon_1$ is proportionally controlled.

The input signal $\varepsilon_1$ for the PWM is provided from the deviation amplifier 10. In this respect, in the deviation amplifier 10, the difference between the signal $I_{fo}$ from the chargeover circuit 17 and the above mentioned field current detection signal $I_{ff}$ is multiplied by the gain of the amplifier 10 ($G = R_{11}/R_8 = R_{10}/R_9$) to output as the input signal $\varepsilon_1$ for the PWM control circuit.

Accordingly, the current control is carried out through the circuit constituted by the deviation amplifier 10, the PWM control circuit 7, the field current detection circuit 9, the chopper circuit 71 and the field winding 2.

Now, when the field current command $I_{fo}$ is produced, the deviation amplifier 10 generates the deviation signal $\varepsilon_1$ as input to the PWM circuit 7 in dependence upon the current feedback signal $I_{ff}$. The PWM control circuit 7 operates the chopper 71 with the PWM output signal eo and by feedback, controls the field current $I_f$ so that it coincides with the command value $I_{fo}$.

Thus, the field current $I_f$ is readily set by changing the current command value $I_{fo}$ as shown in Figure 10.

The PWM circuit shown in Figure 6 is constituted as a variable frequency type PWM circuit. In such a PWM control circuit, the pulse frequency is arranged to maximize at 50% of $\varepsilon_1$, the frequency changes in dependence upon $\varepsilon_1$ which thus represents the conduction rate and $\varepsilon_1$ frequency is controlled to decrease above this point.

Further, even if the current command $I_{fo}$ is abruptly changed, the field current $I_f$ varies in a stepwise fashion to follow the command value as shown in Figure 11. The benefit of such control will be described with regard to Figures 12 and 13. As shown in Figure 12, which shows generator drive torque against generator speed, in a conventional conduction rate control the torque required to drive the generator has a characteristic such that the torque changes in dependence upon temperature change, in that the torque required to drive the generator becomes large at a cool temperature and small at a high temperature for a given generator r.p.m. As a result, the capacity of the field winding of the generator and elements for the chopper in the prior art have to be designed to withstand the increased power generated for the torque required at cool temperatures so that there arose the problem of requiring an excess, i.e. heavy duty, specification. However, with the current control of the present invention, even if there is a resistance difference between cool temperatures and the high temperatures in the field winding, as shown in Figure 13 the current can be controlled to the target current so that influence caused by temperature differences are substantially eliminated. Further, influence from current variation due to the variation of, for example, the power source voltage, does not affect the generator. Accordingly, the previous design requirement to exceed the specification for the field winding in the generator and the switching elements in the chopper is eliminated, and an increase in the capacity of the generator may be achieved. Namely, when the maximum operating value in a normal operating condition is increased up to the characteristic for cool temperature, the capacity increases corresponding thereto, and a generator having a high output is realized. The increase over conventional generators having the same winding and chopper is about 10%.

The operation of the voltage control circuit using the above explained current control circuit is as follows. Now returning to Figure 6, the voltage control circuit 11 controls, by feedback, the actual battery voltage (generator output voltage) $V_B$ so as to coincide with the battery charging voltage value $V_{BC}$. The operation amplifier $A_1$, produces current command signal $I_{fo}$ in dependence between the battery set voltage $V_{BC}$ and the battery voltage $V_B$. As explained above the output signal $\varepsilon_1$ of the current control circuit 10 is derived. The PWM control circuit 7 generates the pulse width control pulse output eo in response to the output signal $\varepsilon_1$ and applies an intermittent pulse voltage $V_f$ to the field winding 2 in the generator through the chopper 71, to thereby control the field current. In the above control operation, the field current $I_f$ is detected by the shunt resistor 8 as explained hereinbefore, and fed back to the current control deviation amplifier circuit 10 through the current detection circuit 9 to carry out the current control. As a result, the armature winding output voltage is controlled to charge the battery 6 and supply current to the load 101a through the three phase rectifier 3. Further, the output voltage $V_B$ of the generator 1 is fed back to the circuit 11, so that the output voltage is feedback-controlled so as to coincide with the battery set voltage $V_{BC}$.

Other features of the present embodiment will now be described with reference to Figure 2.

## 1. Clock circuit 201

The clock circuit 201 generates a fundamental clock frequency of 1MHz and other signals divided therefrom. $CL_1$ is the fundamental clock frequency of 1MHz, drives a driver circuit 202, which charges the gate of FET1 forming the chopper 71 to a high voltage above the B terminal voltage, FET1 being used in the Figure 2 embodiment instead of the transistors $T_1$ and $T_2$ of Figure 6.

$CL_2 \sim CL_{10}$ are clock signals formed by dividing $CL_1$ and are supplied to the respective clock inputs as clock signals.

## 2. Revolution detection discriminating circuit 210

This circuit detects the number of revolutions (r.p.m.) of the generator and outputs revolution number signals for changing over circuit operations.

Since the frequency $f_p$ at the terminal P (one phase of armature winding) is expressed as follows,

$$f_p = \frac{N x q}{60 x 2} \ (Hz)$$

(wherein, N is the revolution number (r.p.m.) of the generator; q is the number of poles in the generator; 2 is a constant for full wave rectification), the detection of the revolution number is achieved by frequency comparison between this frequency $f_p$ and the clock pulses CL, and $CL_{10}$.

When the revolution number of the generator is more than 500r.p.m., the output N1 becomes "1" and below that becomes "0".

When the revolution number of the generator is more than 2500r.p.m. the output N3 becomes "1" and below that becomes "0".

## 3. Power generation stoppage alarm circuit 211

The role of this circuit is to light a charge lamp 212 for indicating when the power generation is stopped in order to prevent engine stoppage due to no charging of the battery if the field winding or armature winding is disconnected or if the FET1 goes open circuit.

In operation, the charge lamp is lit when the revolution number of the generator is below 1000r.p.m. When the revolution number reaches above 1000r.p.m., the charge lamp extinguishes. When the engine revolution number again decreases below 500r.p.m., the charge lamp again lights.

Assuming that the idling revolution number of the engine is 700r.p.m., and the pulley ratio between the crank pulley and the pulley of the generator is 2, the revolution number of the generator during idling is 1400r.p.m. Thus, when the generator is normal, the charge lamp is not lit.

When the number of revolutions is zero, no power is generated, and the charge lamp lights.

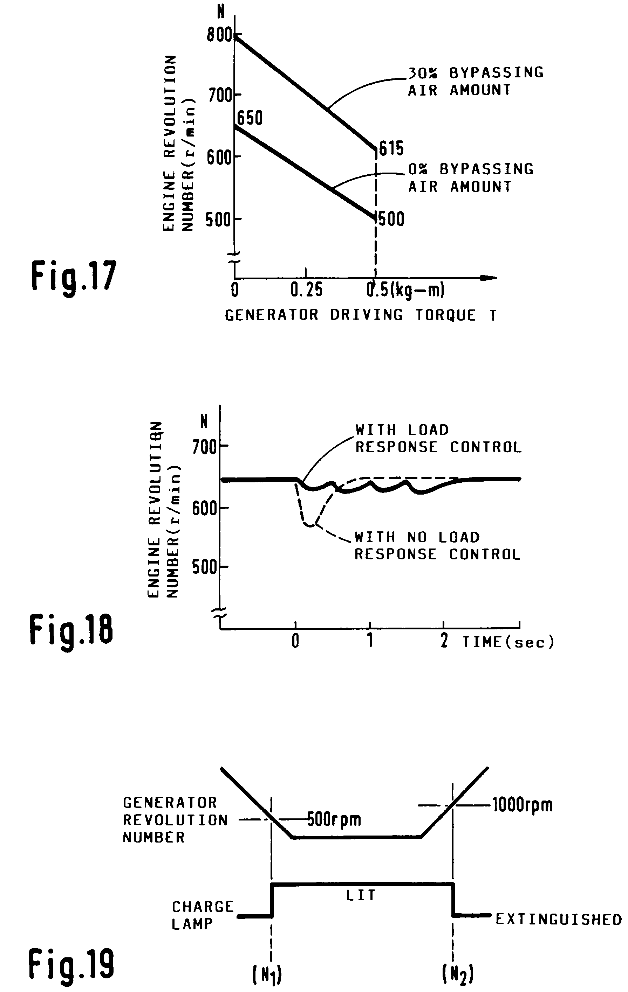

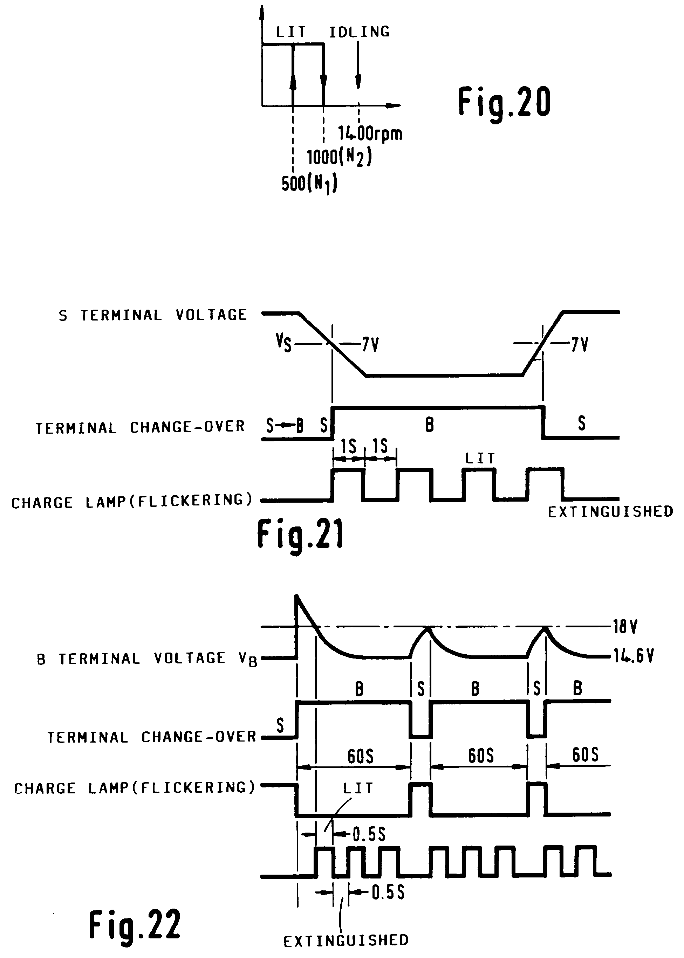

One of the important points is that hysteresis is provided between N1 and N2, which reduces driver anxiety since the lamp does not flicker during starting or idling (refer to Figure 19 and Figure 20).

## 4. S terminal opening alarm circuit 220

The sensing terminal S senses the true battery voltage whereas the voltage at terminal B is subject to volt drop due to wiring resistance.

In the event that the S terminal (battery voltage $V_s$ sensing terminal) is rendered open-circuit due, for example, to wiring disconnection, this circuit is used as follows:-

(1) to prevent the generator from going out of control, and

(2) to provide a warning to a driver by flickering the charge lamp 212.

The operation of the circuit 220 is as follows:-

(1) In normal operation, the voltage control is carried out by comparing the S terminal voltage $V_s$ which is divided to be $V_{Bd}$ with the reference voltage $V_{BC}$. When the S terminal is disconnected from the battery or the battery voltage reduces below a predetermined value (7V), the terminal is changed over from S to B by a S·B terminal voltage change-over circuit 221.
(2) Simultaneously, the charge lamp 212 is flickered. This flickering is carried out by repeated lighting and extinguishing of the charge lamp with an interval of one second (the operation is graphically shown in Figure 21).

5. B terminal open alarm circuit 225

In the event that the B terminal (output cable from the generator) is rendered open-circuit due, for example, to wiring disconnection, this circuit is used as follows:-

(1) to prevent the generator from going out of control,
(2) to provide a warning to a driver by flickering the charge lamp.

If the vehicle continues to be driven when the B terminal is open, the battery discharges (since it is therefore not being charged) and the engine finally stops due to the battery being discharged.
The operation of the circuit 225 is as follows:-

(1) When the S terminal is decoupled, there is no charging into the battery, the S terminal voltage reduces (with regard to a normal condition voltage of 14.5V, the voltage reducing to about 11 - 12V). As a result, the field current command value increases to increase the B terminal voltage. Thereby, when $V_B$ becomes more than a predetermined value (18V), the voltage detection terminal is changed over from the S terminal to the B terminal by the S·B terminal voltage change-over circuit 221. Thereby, $V_B$ is controlled at 14.6V.
(2) Simultaneously the charge lamp 212 is flickered.
(3) The operation of (1) and (2) is reset every predetermined interval (one minute) so as to return the battery sensing voltage $V_s$ to the normal condition when the B terminal open condition is restored to the normal condition.

The function of this circuit is graphically shown in Figure 22.

6. Overvoltage alarm circuit 240

The role of this circuit is to issue an alarm if the voltage control goes out of control for some reason.
Herein, conceivable reasons for the voltage control becoming unstable are as follows:

(1) When the FET1 is short-circuited and breaks down.

(2) The B terminal and the F terminal are short-circuited by an external cause, for example a piece of metal connecting the B and F terminals.

If the operation is continued in the out of voltage control condition,

(i) the battery is over-charged and the engine compartment is filled with hydrogen gas to cause the danger of explosion,

(ii) an overvoltage is induced during high speed generator revolutions causing electric loads on the vehicle, such as lamps and electronic apparatus to be damaged. Such undesirable conditions are forewarned by indicating with the circuit 230.

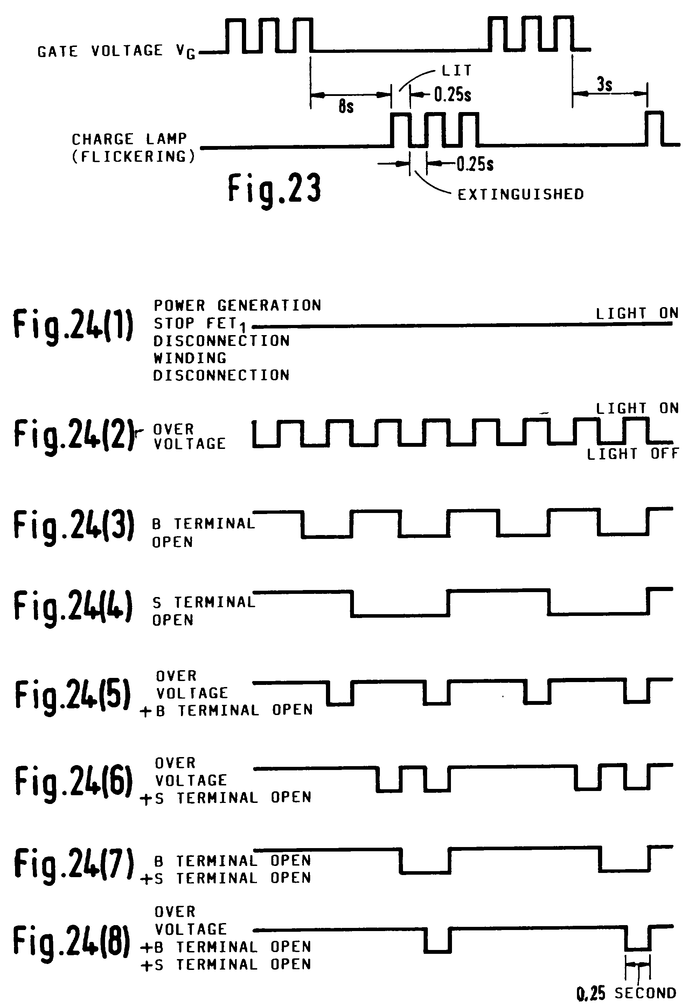

In the operation of the above, the field current command value is rendered zero, and the gate voltage of the FET1 is continuously kept OV. However, when the gate voltage OV continues more than a predetermined interval (3 seconds), the circuit judges that an overvoltage mode is induced, and flickers the charge lamp 212. The lamp flickering cycle is 0.25 second alight and 0.25 second extinguished, as shown in Figure 23.

7. Gate circuit 235

The role of this circuit is to flicker the charge lamp 212 and to thereby issue an alarm, when the S terminal and the B terminal are open-circuited, an overvoltage is induced and the power generation is stopped. The operation is carried out by calculating the logical sum (OR) of the four signals from the previously described circuits 220, 225 and the overvoltage alarm circuit 240 and power generation stopped circuit 211, and by driving the gate of the FET2.
An important point is that since the flickering cycles are differentiated depending upon the causes by changing the cycle with an integral number multiplication, the wrong portion can be determined by noting the flickering pattern of the charge lamp. Further, a priority can be assigned to the lamp indications depending upon their importance, for example depending upon the following order the flickering frequency may be reduced, (1) power generation stoppage, (2) overvoltage, (3) B terminal open, and (4) S terminal open, as shown with reference to Figure 24. Figure 24 also shows various combinations of the above in graphical sub-figures (5) to (8).

### 8. Overcurrent protection 230

The role of this circuit is to prevent breakdown of the FET1 due to overcurrent conduction, when the field winding is short-circuited.

Its operation is to lock the gate of the FET1, when the voltage at F terminal is maintained low even though eo is high.

### 9. Initial excitation circuit 14

The role of this circuit is to detect a condition in which the revolution number $N_G$ of the generator is as low as the revolution number $N_1$ (=500r.p.m.) to disable the self-excitation power generation, and to output a current command value $I_{f2}$ so as to render the conduction rate of the chopper to be about 30%, and based thereon, a target current command value $I_{fo}$ is outputted from the change-over circuit 17.

### 10. S.B. terminal voltage change-over circuit 221

The role of this circuit is to always feedback the S terminal voltage (the voltage directly applied by the battery) through a filter circuit 240, to input the B terminal voltage to continue the voltage control in the event that the voltage control is being performed when the S terminal is decoupled to thereby prevent a non-charging condition to the battery from the generator.

In operation, the B terminal voltage and the S terminal voltage are applied to circuit 221. Then, when a signal from the S terminal open alarm circuit 220 is generated, the detection terminal is changed over from the S terminal to the B terminal. When a signal from the B terminal open alarm circuit 225 is generated, the voltage signal is changed over from the S terminal to the B terminal to output the B terminal voltage to the filter circuit 240.

### 11. Filter circuit 241

The role of this circuit is to smooth any ripple in the rectified output voltage of the generator at the S·B terminal voltage and to stabilize the voltage feedback control.

In operation, the ripple voltage is eliminated by using a Miller integrator type low pass filter, the battery average voltage is outputted, and the battery voltage is fed back to the voltage-current command value conversion circuit 11. Thereby, the average value of the battery voltage is precisely detected to render the current command value $I_{f1}$ a control signal which is ripple free.

### 12. Constant voltage circuit 245

The role of this circuit is to convert the battery voltage to a predetermined constant voltage and thereafter to supply current to respective control circuits.

### 13. Voltage-current command value conversion circuit 11

The role of this circuit is to generate the current command value $I_{f1}$ which controls the field current of the generator so as to maintain the battery terminal voltage at a constant value in response to a battery voltage set value.

In operation, the deviation between the battery set voltage $V_{BC}$ and the output $V_{Bd}$ from the filter circuit 241 is obtained by the comparator 12 to provide voltage $V_{BC}$, to circuit 11 where it is amplified to generate the current command value $I_{f1}$.

### 14. Power generation cut control circuit 250

The role of this circuit is to reduce the driving torque demanded by the generator during the time of vehicle load increase such as acceleration of the vehicle, to thereby enhance acceleration.

Specifically, when a throttle opening degree detection switch SW1, which is connected in series with the charge lamp 212, is opened, for example when the throttle is fully open, power generation is cut until the acceleration is completed (after, for example, about 10 seconds).

In operation, for the detection of power generation cut, the drain-source voltage of the FET2 used for lighting the lamp 212 ($V_{DS}$) is applied to the voltage detection terminal of circuit 250 and serves both for lighting the lamp 212 and detecting the power generation cut.

Thus, in the power generation cut control circuit 250 the drain-source voltage $V_{DS}$ of the FET2 and the current flowing through the detection resistor $R_{g2}$ of the FET2 are inputted. Now, when the switch SW1 opens, the voltage $V_{DS}$ of the FET2 reduces, and when no current is flowing through the FET2, the power generation is cut for the acceleration time of the vehicle, therefore a set value change-over signal is transmitted to the change-over circuit and a chopper gate lock signal is generated to a gate lock circuit 255.

### 15. Output current control circuit 260

The role of this circuit is to control the maximum power generation of the generator with a signal from an external controller and to suppress the torque generation for achieving enhancement of acceleration of the vehicle, to improve fuel consumption and to prevent engine stoppage.

In operation, a duty signal is inputted from an external controller (not shown) to the output current control circuit 260 through a C terminal and with an output from the control circuit 260 the duty cycle of the PWM control circuit is controlled.

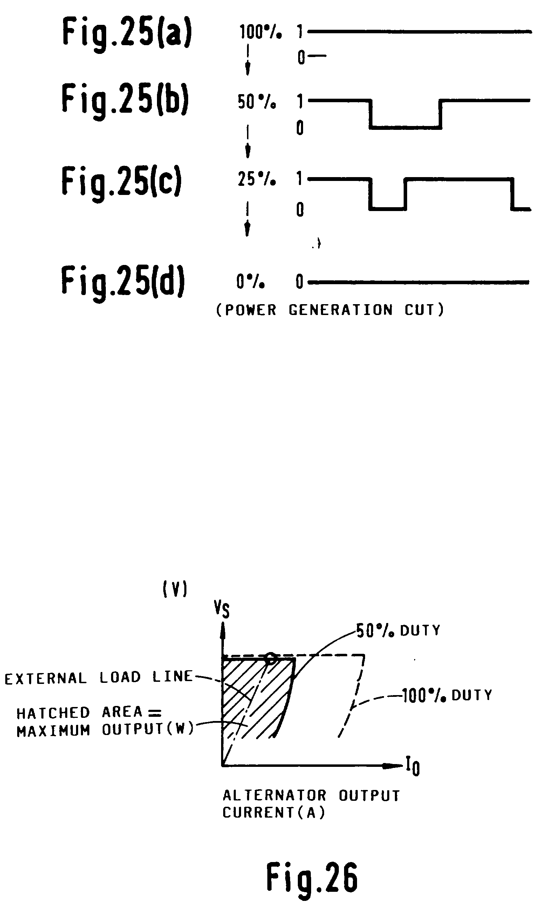

When the duty of the signal inputted at the C terminal is linearly changed in response to the load on the vehicle as shown in the representative duty cycles of 100% to 0% shown in Figure 25(a) - (d), the output current-voltage characteristic of the generator is continuously controlled as shown in Figure 26.

In Figure 26, as representative examples, examples of duty 100% and 50% are illustrated. In Figure 26 an external load line is shown in chain broken line and a 50% duty cycle is shown to service the load.

### 16. Load response control circuit 15

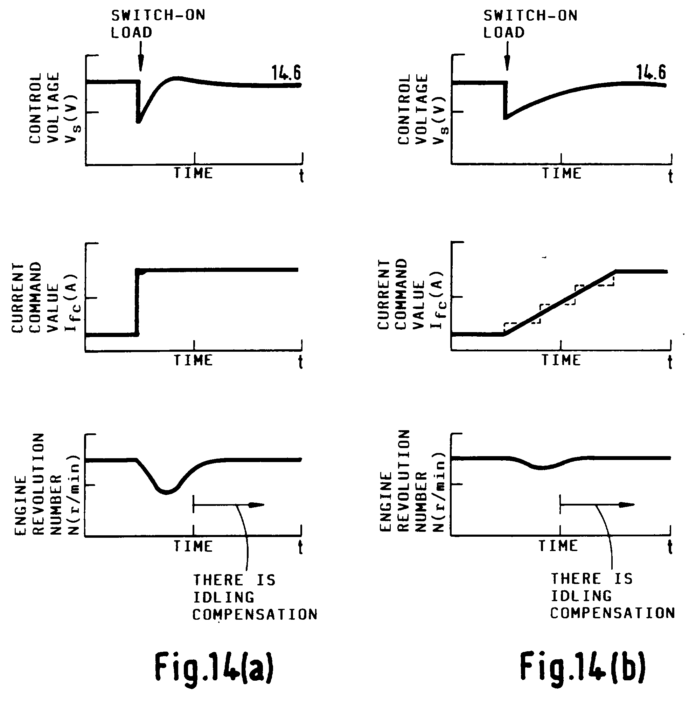

In the present embodiment, a load response control function is provided for reducing variation in the engine r.p.m. due to a sudden electric load change or vibration caused thereby. Figures 14(a) and (b) illustrate its operating principle.

When there is no load response control and a load is switched on, the control voltage (the battery terminal voltage) reduces. However, the battery is quickly charged by responding to the current command value $I_{fc}$ in step by virtue of the feedback operation of the control system. At the moment the load is switched on, the generator is a load to the engine. For this reason the number of engine revolutions reduces (as shown in the lowermost graph of Figure 14(a)). This is problematic in particular near the engine idling condition when the engine revolutions are low, since the increased load on the engine risks the danger of engine stoppage (stalling).

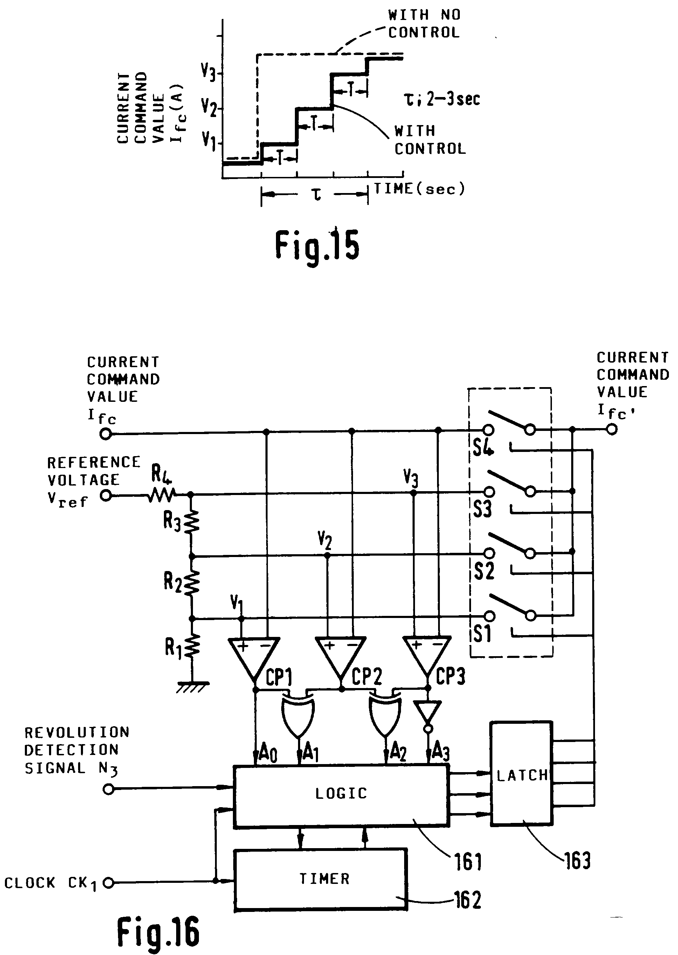

To overcome such a problem, the load response control 15 controls the generator. Even if the control voltage is reduced by switching on a load, the current command value $I_{fc}$ is controlled to gradually increase with a predetermined pattern (e.g. in a stepwise fashion), the variation in the engine r.p.m. can be reduced, although restoration of the control voltage is delayed (Figure 14(b)). For accomplishing this purpose, a delay circuit having a predetemined time constant is provided in the control loop so as to change the current command value output for the voltage control in response to the number of revolutions. Patterns of the current command value are illustrated in Figure 15 in which variation of the command value pattern in dependence upon inclusion and non-inclusion of the load response control is illustrated. In the above mentioned prior art, the current command value is changed in one step and, conventionally with no control, so the value thereof is changed to another reference value after a predetermined reference value is exceeded, but, as preferably provided in this invention, if there is control, the value is fixed for a predetermined time. Thereafter, judgment is carried out whether another reference value is exceeded, and reference values are successively changed over to a next reference value, thereby the current command value slowly rises and in a step-wise manner. Finally, the current command value is fixed to a final reference value which is the same value as that in the prior art with no control. When the current command value reduces, no switching operation of the reference value is carried out, but the value is changed to the same value as that with no control.

Thereby, regardless of the current command value before the load is switched on, the command value is fixed only after a reference value is exceeded, so that over charging and over discharging can be prevented. The load response control is adapted to be carried out near the revolution number at idling of the vehicle engine and to operate below a generator revolution number of 2500r/min.

A block circuit for generating an actual command pattern is illustrated in Figure 16, in which analogue switches S1 - S4 switch the current command value $I_{fc'}$, comparators CP1 - CP3 compare the divided down reference voltage $V_{ref}$ with the command values, and a digital logic circuit 161 including a timer 162 and a latch 163 control the control operation. The comparison step with the reference value is adapted to be three steps by the voltage divider formed by resistors RS1 - RS4 so as not to enlarge the circuit scale since it is built in to an IC.

For verifying the effects of the above described load response control, simulation thereof was performed. Figure 17 shows graphs of a model of an external torque-engine revolution number characteristic by using the amount of air drawn by the engine during idling through a throttle bypass passage as a parameter. Figure 18 shows responses of the idling revolution number when an electric load (equivalent to 20A) is switched on while using this model. With the load response control (shown in solid line), it was confirmed that the reduction of the engine revolution number is reduced to below 25r/min whereas without the control (shown in broken lines) the revolutions dropped by 100r/min. when the load was switched on.

Although, in the present embodiment the comparison step is selected to be three, however the present invention is not limited thereto, and can be modified for example to be any number, or even stepless.

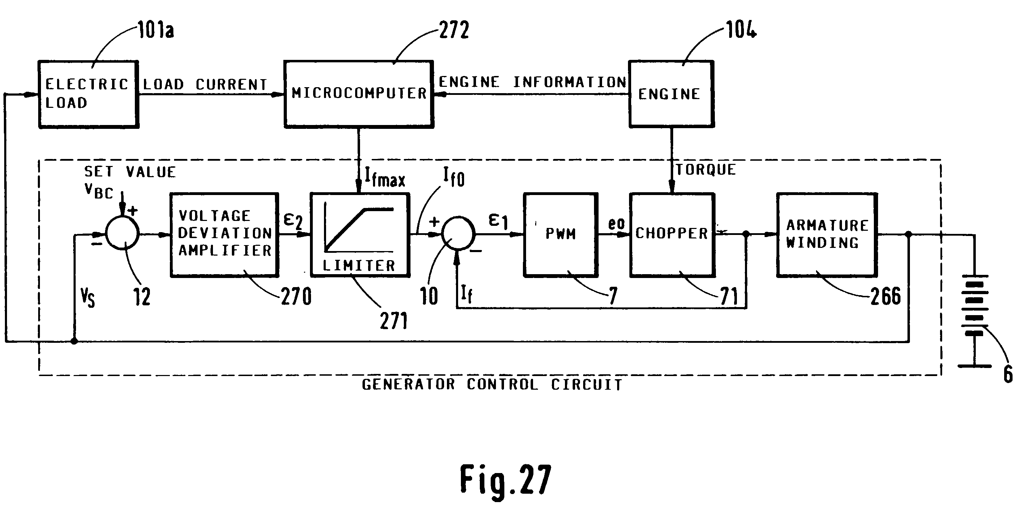

Hereinbelow the manner of control carried out by a microcomputer mounted on a vehicle is explained. The principle thereof is explained with reference to the functional block diagram shown in Figure 27.

The deviation between the set value $V_{BC}$ of the battery voltage and the actual value $V_{BD}$ determined by comparator 12 is amplified by the voltage deviation amplifier 270 and is outputted to a limiter 271.

The limiter outputs a current command value $I_{fo}$ in response to the output from the voltage deviation amplifier 270. Before deciding the current command value $I_{fo}$, the load current supplied to the electric load 101a, and load information to the engine 104 of the vehicle, or environmental information are inputted to a microcomputer 272 which calculates the maximum value of the optimum current command value $I_{fo}$, which maximum value is denoted as $I_{fmax}$ at every moment, and decides and outputs the current command value $I_{fo}$ within the range up to the maximum $I_{fmax}$ in response to the voltage deviation.

Next, the deviation between the current command value $I_{fo}$ and the actual current value $I_f$ is detected by comparator 10, and is applied as an amplified output to the pulse width modulation circuit (PWM) 7.

The PWM 7 drives the chopper 71 in the field winding driving circuit with a duty cycle in accordance with the driving signal to control the field winding current $I_f$. Thereby, the battery is properly charged by the output generated in the armature winding 266 of the generator.

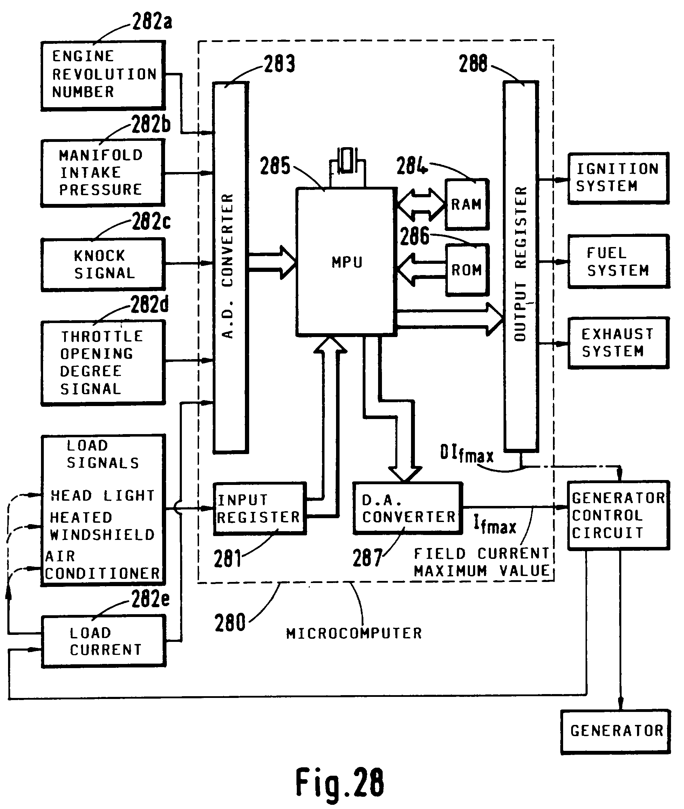

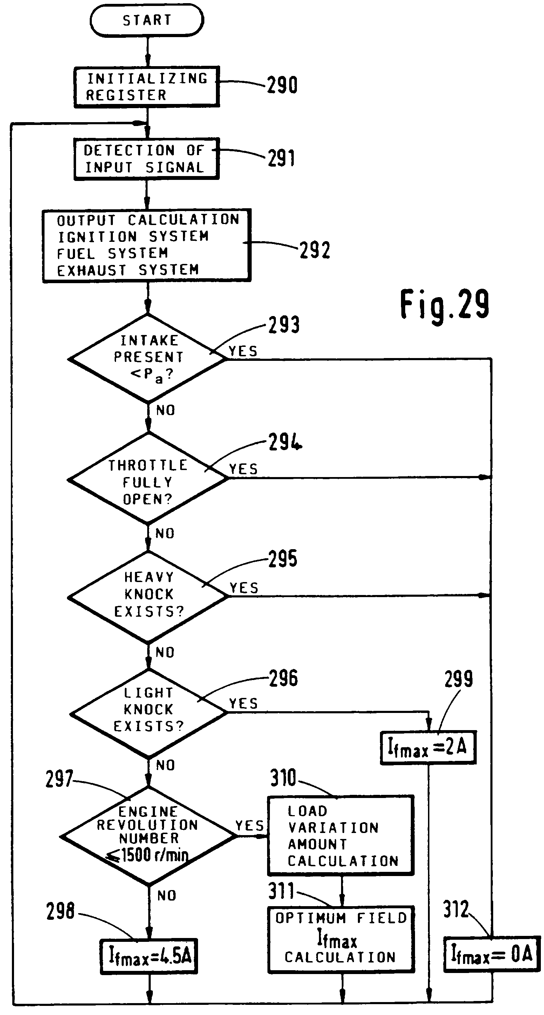

The relationship of the generator with the engine control elements will now be described with reference to the block diagram shown in Figure 28 and the control flow chart shown in Figure 29.

A microcomputer 280 of which the initial setting of the input register 281 is completed at step 290 detects input signals at step 291 such as engine revolution number 282a, manifold intake pressure 282b, knock signals 282c, throttle opening angle signal 282d and battery load current 282e through an A-D converter 283 and inputs into a random access memory RAM 284 via microprocessor 285.

The load current may be applied through the input register 281 while detecting the particular load which is switched on by an ON/OFF switch therefor (not shown).

At step 292, control signals for the ignition system, control signals for fuel system and control signals for exhaust system are calculated and outputted based on the input signals and in accordance with the calculation flow stored in a read only memory ROM 286.

At step 293 the size of the engine load in terms of the engine manifold intake pressure is determined and if the intake pressure is judged to be lower than a predetermined pressure Pa, the maximum value $I_{fmax}$ of the command value is set at zero so that the generator does not become a load torque to the engine, and the field current becomes zero.

When the manifold intake pressure is judged to be higher than the predetermined value Pa, the engine is judged to be in a normal load operation and the process proceeds to the next step 294.

At step 294, whether the opening angle of the throttle is fully open or not is detected. If judged to be fully open, an acceleration condition is judged, and the maximum value $I_{fmax}$ of the current command value $I_{fo}$ is set at zero so that the generator is arranged not to become a load to the engine.

When the throttle is not fully open, the normal running condition is judged and the process proceeds to the next step 295.

At step 295, a heavy knock condition is determined with knock signals; when a heavy knock condition is determined, the maximum value $I_{fmax}$ of the current command value is set at zero to ensure the generator is not a load to the engine.

When the condition is not a heavy knock condition, the process proceeds to the next step 296.

At step 296, whether or not a light knock condition is determined from knock signals; when a light knock condition is determined, the maximum value $I_{fmax}$ of the current command value $I_{fo}$ is set at 2A to suppress the power generation capability at a low level thereby reducing the load torque caused by the generator to the engine.

When the condition is below the light knock detection threshold, no knock condition is judged, and the process proceeds to the next step 297.

At step 297, whether or not the engine revolution number is below 1500r.p.m. is determined; when the revolution number is determined below 1500r.p.m., the size of the electric load is calculated at step 310 by, for example, determining the number of electrical loads having switches therefor which are turned ON and based upon this the optimum current command value $I_{fmax}$ is calculated at step 311 and outputted.

When the revolution number is more than 1500r.p.m., the maximum value $I_{fmax}$ of the current command value is set at a maximum allowable current value of 4.5A at step 298 and is controlled so as to obtain a maximum output.

The thus determined maximum value $I_{fmax}$ of the current command value is inputted to the limiter 271 of the generator control circuit of Figure 27 through a D-A converter 287.

It is possible to output the maximum value of the field current command value $I_{fmax}$ from the output register 288 of the microcomputer as a duty signal. In this instance, the field current command value is supplied to the field winding chopper as a duty control signal.

In the present invention preferred feature as described above, since the field current is controlled to be modified in response to the engine manifold intake pressure, when a load suddenly acts on the engine such as when the vehicle is climbing a hill, the generator is adapted so as not to be a load to the engine so that the possibility of engine stoppage caused thereby is prevented and greater power output is thus available to be given to the vehicle transmission.

Further, even when the throttle is fully open, the power generation off control is activated so the engine output is fully utilized during acceleration to enhance the acceleration performance.

Additionally, since the power generation capability of the generator may be controlled in accordance with the knocking condition of the engine, when the engine power output is reduced due to retarding the ignition timing (which occurs during knock generation) the driving torque required for the generator is decreased so that problems such as engine stoppage due to output reduction and the advancement of the knocking condition are prevented.

Moreover, when the number of engine revolutions is low, an optimum field current control is performed in response to the load current.

In this invention, the variation of the field current due to warm or cool temperature differences of the field winding may be prevented by controlling the field current of the generator. Accordingly, unlike the conventional generator which was designed to have a design margin to allow for the current variation caused by temperature variations between cool and warm, the present generator need not estimate the variation so that a generator using this invention having the same size field winding as the conventional generator will achieve an output power increase. Conversely, the present generator having the same output as a conventional generator, is reduced in size. Further, the rating of the semiconductor elements in the chopper may be reduced in the present generator vis-a-vis a generator of the prior art having the same power output. Still further, when the load is suddenly changed, the step-up operation of the field current is controlled by an external signal, and a sudden load variation to the automobile engine prevented. That is, the field current value can be freely and continuously changed from a minimum value to a maximum value in response to the external signals. Accordingly, reduction and stoppage of power generation by the present generator during engine control operations is readily realized.

Further, when the amount of power generated is small during a low speed rotation, the field current is limited to a necessary minimum amount. It is possible to render the field current into a so-called initial excitation condition to reduce the discharge amount of the battery as well as to suppress the field loss.

Further, through the current detection of the present invention, the continuous field current can be determined by the intermittent current flowing from the chopper without directly detecting the field current thereby avoiding the necessity for an expensive isolation type current detector. Moreover, the invention has the advantage that the field current is continuously detectable from a minimum value to a maximum value.

It will now be understood that the present invention is advantageously adapted to obtain a command value of current $I_{fo}$ (target field current) to be supplied to the field winding of a generator with a signal in response to a deviation voltage signal $\varepsilon_2$ and a signal in response to an actual current flowing through the field winding $I_{ff}$, and to supply a current to the field winding based upon this command value; therefore, when the output of the generator is in a broad range and providing an optimum output in response to the load requirement, the field current is stabilised to enable an optimum output control of the generator.

Further, in the present invention, relating to the detection of the field current, the necessity to employ a current transformer is eliminated, so that a control device for the generator having reduced cost and suitable for forming in an IC is obtained.

## Claims

1. A control apparatus for an electric generator having an armature winding for providing a rectified output voltage to be applied to a load and a field winding adapted to be driven by rotation of an engine of a vehicle, said apparatus including means (13) for detecting the output voltage, means (12) for comparing the output voltage with a predetermined voltage, converting means (11) for converting the output of said comparing means (12) to a current command value ($I_{FO}$), a chopper (71) for controlling the field current of said field winding (2), means (9) for detecting the actual current flowing through the field winding ($I_{FF}$), and comparator means (10) for generating a signal indicative of a deviation between said current command value ($I_{FO}$) and said actual current flowing through the field winding ($I_{FF}$) and for applying the deviation signal to pulse width control means (7) for controlling the duty of said chopper (71) to render said deviation to be substantially zero, characterized in that said current command value is a first current command value ($I_{F1}$) and there is further provided means (14, 15, 16) responsive to at least one parameter affecting said field current which comprises at least one means (14) arranged to determine the rotational speed of the field winding, an electrical load responsive circuit (15) and a temperature detection circuit (16) adapted to detect the temperature of the chopper for generating at least one further current command value ($I_{F2}$, $I_{F3}$, $I_{F4}$) and means (17) for selecting between said first and said further current command value ($I_{F1}$ - $I_{F4}$) to provide an input to said comparator means (10), and in that said load is a battery (6) and means (13) are provided for detecting the actual voltage ($V_{Bd}$) of said battery (6) so that said means for comparing (12) is arranged to compare the actual voltage ($V_{Bd}$) of said battery with said predetermined voltage ($V_{BC}$) and wherein a current feedback loop from the field winding (2) to said pulse width control means (7), and a voltage feedback loop from the battery (6) to said means for comparing (12) are formed.

2. A control apparatus as claimed in claim 1 wherein the means for selecting (17) is arranged to adaptively select current command values from the converting means (11), rotational speed determining means (14), the electrical load responsive circuit (15) and the temperature detection circuit (16).

3. An control apparatus as claimed in any preceding claim wherein power generation control means (250) are provided to reduce the driving torque demanded by the generator during the time of vehicle load increase, such as acceleration.

4. A control apparatus as claimed in claim 3 wherein said power generation control means (250) includes a throttle opening degree detector and a controllable switch adapted to be controlled in dependence upon the opening of the throttle and which controllable switch is adapted to transmit a control signal to the chopper (71) to cut off the field current through said field winding (2).

5. A control apparatus as claimed in any preceding claim wherein there is provided an output current control circuit (260) adapted to apply a signal to said pulse width control means which is a pulse width modulator (7) adapted to control the duty cycle of said chopper (71) such that the chopper duty cycle is varied to suppress torque required to drive the generator at times of acceleration of said vehicle.

6. A control apparatus as claimed in any preceding claim wherein there is provided a load response control circuit (15) including an electrical load detector adapted to determine the current required by the load, and means for applying the current command value ($I_{fc}$, Figures 15, 16) as a stepwise fashion signal.

7. A control apparatus as claimed in any preceding claim in combination with an engine knock detector wherein said apparatus is adapted to control the duty cycle of said chopper (71) to reduce the torque required to drive the field winding when knocking is detected.

8. A control apparatus as claimed in claim 7 wherein during a heavy knock signal output from said knock detector, the field current is cut off to stop power generation.

9. A control apparatus as claimed in any preceding claim wherein the pulse width control means (7) includes a storage means ($C_2$) for storing the pulse width control means ON value and for applying said ON value as output of the pulse width control means (7) to the chopper (71) when the chopper is initially turned OFF.

10. A control apparatus as claimed in claim 1 wherein the maximum current value in the field winding is determined by responsive means (14 - 16) and means (13) for determining the electric load connected to a battery, the output of the generator being controlled by controlling the field winding current so that the actual voltage of the battery ($V_{Bd}$) is maintained within a predetermined voltage range.

11. A control apparatus as claimed in claim 1 including a throttle of the vehicle, detector means for determining the amount of opening of the throttle adapted to supply a signal to control the generator to render the output of said generator substantially zero when the throttle is fully open.

12. A control apparatus as claimed in claim 1 wherein means are provided for detecting the intake manifold pressure of the vehicle whereby the power generation capacity of the generator is controlled to be substantially zero when the intake manifold pressure is lower than a predetermined value, thereby indicating a heavy load condition.

13. A control apparatus as claimed in any preceding claim wherein means (210) are provided for detecting the number of revolutions of the engine whereby when said revolutions are below a predetermined number power generation is reduced as the electric load increases on the generator.

14. A control apparatus as claimed in any preceding claim wherein means (211) are provided for generating an alarm when the power generation capacity is controlled to be substantially zero.

15. A control apparatus as claimed in claim 14 wherein said means for generating an alarm includes a lamp which is adapted to flicker at different rates in dependence upon different causes for the alarm.

16. An electric generator including a control apparatus as claimed in any preceding claim.

**Patentansprüche**

1. Regelvorrichtung für einen elektrischen Generator mit einer Ankerwicklung zur Bereitstellung einer gleichgerichteten Ausgangsspannung, die an einen Verbraucher angelegt wird und mit einer Feldwicklung, die durch die Motorumdrehungen eines Fahrzeugs gesteuert werden kann, wobei die Vorrichtung folgendes umfaßt: eine Einrichtung (13) zur Erfassung der Ausgangsspannung; eine Einrichtung (12) zum Vergleichen der Ausgangsspannung mit einer vorbestimmten Spannung; eine Umformeinrichtung (11) zum Umformen der Ausgabe der Vergleichseinrichtung (12) mit einem Strom-Sollwert ($I_{FO}$); einen Zerhacker (71) zur Regelung des Feldstroms der genannten Feldwicklung (2); eine Einrichtung (9) zur Erfassung des tatsächlich durch die Feldwicklung fließenden Stroms ($I_{FF}$); eine Komporatoreinrichtung (10) zur Erzeugung eines Signals, das eine Abweichung zwischen dem Strom-Sollwert ($I_{FO}$) und dem tatsächlich durch die Feldwicklung fließenden Stroms ($I_{FF}$) anzeigt sowie für die Zufuhr des Abweichungssignals an eine Pulsbreitenregelungseinrichtung (7) zur Regelung des Arbeitszykluses des Zerhackers (71), so daß die Abweichung im wesentlichen Null wird, dadurch gekennzeichnet, daß es sich bei dem Strom-Sollwert um einen ersten Strom-Sollwert ($_{F1}$) handelt, und wobei ferner eine Einrichtung (14, 15, 16) vorgesehen ist, die auf mindestens einen Parameter anspricht, der den Feldstrom beeinflußt, mit mindestens einer Einrichtung (14), die so angeordnet ist, daß sie die Umdrehungsgeschwindigkeit der Feldwicklung bestimmt, sowie mit einem elektrischen Verbraucheransprechkreis (15) und einem Temperatur-Detektorkreis (16) zur Erfassung der Temperatur des Zerhackers, um mindestens einen weiteren Strom-Sollwert ($I_{F2}$, $I_{F3}$, $I_{F4}$) zu erzeugen, und mit einer Einrichtung (17) zur Auswahl zwischen dem ersten und dem genannten weiteren Strom-Sollwert ($I_{F1}$-$I_{F4}$), so daß eine Eingabe in die Komparatoreinrichtung (10) vorgesehen wird, und wobei es sich bei dem Verbraucher um eine Batterie (6) handelt, und wobei eine Einrichtung (13) zur Erfassung der Ist-Spannung ($V_{Bd}$) der Batterie (6) vorgesehen ist, so daß die genannte Einrichtung zum Vergleichen (12) so angeordnet ist, daß sie die Ist-Spannung ($V_{Bd}$) der Batterie mit der genannten vorbestimmten Spannung ($V_{BC}$) vergleicht, und wobei eine Stromrückkopplungsschleife von der Feldwicklung (2) zu der Pulsbreitenregelungseinrichtung (7) und eine Spannungsrückkopplungsschleife von der Batterie (6) zu der Einrichtung zum Vergleichen (12) gebildet werden.

2. Regelvorrichtung nach Anspruch 1, wobei die Einrichtung zur Auswahl (17) so angeordnet ist, daß sie adaptive Strom-Sollwerte von der Umformeinrichtung (11), der Umdrehungsgeschwindigkeits-Bestimmungseinrichtung (14), dem elektrischen Verbraucheransprechkreis (15) und dem Temperatur-Detektorkreis (16) auswählt.

3. Regelvorrichtung nach einem der vorstehenden Ansprüche, wobei eine Regeleinrichtung (250) für die Krafterzeugung vorgesehen ist, um das Antriebsmoment zu verringern, das von dem Generator während des Zeitraums des Anstiegs der Fahrzeugbelastung verlangt wird, wie zum Beispiel bei der Beschleunigung.

4. Regelvorrichtung nach Anspruch 3, wobei die Krafterzeugungs-Regeleinrichtung (250) einen Drosselöffnungswinkeldetektor und einen Regelsdhalter umfaßt, der in Abhängigkeit von der Drosselöffnung geregelt werden kann, und wobei der Regelschalter ein Steuersignal an den Zerhacker (71) senden kann, um den Feldstrom durch die Feldwicklung (2) zu unterbrechen.

5. Regelvorrichtung nach einem der vorstehenden Ansprüche, wobei ein Ausgangsstrom-Regelkreis (260) vorgesehen ist, der der Pulsbreitenregelungseinrichtung, bei der es sich um einen Pulsbreitenmodulator (7) handelt, der den Arbeitszyklus des Zerhackers (71) regeln kann, ein Signal zuführen kann, so daß der Arbeitszyklus des Zerhackers so verändert wird, daß das für den Antrieb des Generators erforderliche Drehmoment während Beschleunigungen des Fahrzeugs unterdrückt wird.

6. Regelvorrichtung nach einem der vorstehenden Ansprüche, wobei ein Verbraucheransprechregelkreis (15) vorgesehen ist, der einen elektrischen Verbraucherdetektor umfaßt, der den von dem Verbraucher verlangten Strom bestimmen kann, und mit einer Einrichtung, die den Strom-Sollwert ($I_{fc}$, Figuren 15, 16) als stufenweises Formsignal zuführt.

7. Regelvorrichtung nach einem der vorstehenden Ansprüche in Kombination mit einem Motorklopfsensor, wobei die Vorrichtung dazu geeignet ist, den Arbeitszyklus des Zerhackers (71) zu regeln, um das für den Antrieb der Feldwicklung erforderliche Drehmoment zu verringern, wenn ein Klopfzustand erfaßt wird.

8. Regelvorrichtung nach Anspruch 7, wobei der Feldstrom während einer starken Klopfsignalausgabe des Klopfdetektors unterbrochen wird, um die Krafterzeugung anzuhalten.

9. Regelvorrichtung nach einem der vorstehenden Ansprüche, wobei die Pulsbreitenregelungseinrichtung (7) eine Speichereinrichtung (C2) zum Speichern des EIN-Werts der Pulsbreitenregelungseinrichtung umfaßt sowie für die Zufuhr des EIN-Werts als Ausgabe der Pulsbreitenregelungseinrichtung (7) an den Zerhacker (71), wenn sich der Zerhacker im Ausgangszustand im AUS-Zustand befindet.

10. Regelvorrichtung nach Anspruch 1, wobei der maximale Stromwert in der Feldwicklung durch die Ansprecheinrichtung (14-16) und die Einrichtung (13) zur Bestimmung der mit einer Batterie verbundenen elektrischen Belastung bestimmt wird, wobei die Ausgabe des Generators dadurch geregelt wird, daß der Feldwicklungsstrom so geregelt wird, daß die Ist-Spannung der Batterie ($V_{Bd}$) innerhalb eines vorbestimmten Spannungsbereichs gehalten wird.

11. Regelvorrichtung nach Anspruch 1 mit einer Drosselklappe des Fahrzeugs, wobei sich die Detektoreinrichtung zur Bestimmung des Ausmaßes der Drosselöffnung dazu eignet, ein Signal abzugeben, um den Generator so zu regeln, daß die Ausgabe des Generators im wesentlichen Null wird, wenn die Drosselklappe ganz offen ist.

12. Regelvorrichtung nach Anspruch 1, wobei eine Einrichtung zur Erfassung des Ansaugleitungsdrucks des Fahrzeugs vorgesehen ist, wobei die Krafterzeugungskapazität des Generators so geregelt wird, daß sie im wesentlichen Null ist, wenn der Ansaugleitungsdruck geringer ist als ein vorbestimmter Druck, wodurch ein hoher Belastungszustand angezeigt wird.

13. Regelvorrichtung nach einem der vorstehenden Ansprüche, wobei eine Einrichtung (210) zur Erfassung der Motordrehzahl vorgesehen ist, wobei die Krafterzeugung bei einer Drehzahl unter einem vorbestimmten Wert verringert wird, während die elektrische Belastung an dem Generator zunimmt.

14. Regelvorrichtung nach einem der vorstehenden Ansprüche, wobei eine Einrichtung (211) zur Erzeugung eines Alarms vorgesehen ist, wenn die Krafterzeugungskapazität so geregelt wird, daß sie im wesentlichen Null ist.

15. Regelvorrichtung nach Anspruch 14, wobei die Einrichtung zur Erzeugung eines Alarms eine Lampe umfaßt, die abhängig von unterschiedlichen Ursachen für den Alarm mit verschiedenen Frequenzen flimmert.

16. Elektrischer Generator mit einer Regelvorrichtung gemäß den vorstehenden Ansprüchen.

## Revendications

1. Appareil de commande pour un générateur électrique ayant un bobinage d'induit pour fournir une tension de sortie redressée à appliquer à une charge et un bobinage de champ agencé pour entraînement en rotation par le moteur d'un véhicule, ledit appareil comportant des moyens (13) pour détecter la tension de sortie, des moyens (12) pour comparer la tension de sortie avec une tension prédéterminée, des moyens de conversion (11) pour convertir le signal de sortie desdits moyens de comparaison (12) à une valeur exigée de courant ($I_{F0}$), un rupteur (71) pour commander le courant de champ dudit bobinage de champ (2), des moyens (9) pour détecter le courant réel passant par le bobinage de champ ($I_{FF}$), et des moyens de comparateur (10) pour générer un signal indicateur d'un écart entre ladite valeur exigée de courant ($I_{F0}$) et ledit courant réel passant par le bobinage de champ ($I_{FF}$) pour appliquer le signal d'écart à des moyens de commande de largeur d'impulsion (7) pour commander le service dudit rupteur (71) pour rendre ledit écart essentiellement à la valeur de zéro, caractérisé en ce que ladite valeur exigée de courant est une première valeur exigée de courant ($I_{F1}$) et qu'il est prévu en outre des moyens (14, 15, 16) sensibles à au moins un paramètre qui influence ledit courant de champ qui comprennent au moins un moyen (14) agencé pour déterminer la vitesse en rotation du bobinage de champ, un circuit sensible à la charge électrique (15) et un circuit de détection de température (16) adapté pour la détection de la température du rupteur pour générer au moins une valeur supplémentaire exigée de courant ($I_{F2}$, $I_{F3}$, $I_{F4}$) et des moyens (17) pour sélectionner parmi ladite première valeur exigée de courant et ladite valeur supplémentaire exigée de courant ($I_{F1}$ - $I_{F4}$) pour fournir un signal d'entrée auxdits moyens de comparateur (10), et en ce que ladite charge est un accumulateur (6) et des moyens (13) sont prévus pour détecter la tension réelle ($V_{Bd}$) dudit accumulateur (6) de telle façon que lesdits moyens de comparaison (12) fonctionnent pour comparer la tension réelle ($V_{Bd}$) dudit accumulateur avec ladite tension prédéterminée ($V_{BC}$) et dans lesquels sont formés une boucle de rétroaction sur le courant à partir du bobinage de champ (2) jusqu'aux dits moyens de commande de largeur d'impulsion (7), et une boucle de rétroaction sur la tension à partir de l'accumulateur (6) jusqu'aux dits moyens de comparaison (12).

2. Appareil de commande selon la revendication 1, dans lequel les moyens de sélection (17) fonctionnent pour sélectionner de façon adaptative les valeurs exigées de courant issues des moyens de conversion (11), des moyens de détermination de la vitesse en rotation (14), du circuit sensible à la charge électrique (15) et du circuit de détection de température (16).

3. Appareil de commande selon l'une quelconque des revendications précédentes, dans lequel des moyens de commande de génération d'énergie (250) sont prévus pour réduire le couple d'entraînement demandé par le générateur pendant la période d'augmentation de charge du véhicule, telle qu'une accélération.

4. Appareil de commande selon la revendication 3, dans lequel lesdits moyens de commande de génération d'énergie (250) comportent un détecteur de degré d'ouverture de la commande des gaz et un commutateur pilotable agencé pour son pilotage en fonction de l'ouverture de la commande des gaz, lequel commutateur pilotable est agencé pour transmettre un signal de commande au rupteur (71) pour couper le courant de champ passant dans ledit bobinage de champ (2).

5. Appareil de commande selon l'une quelconque des revendications précédentes, dans lequel il est prévu un circuit de commande de courant de sortie (260) agencé pour appliquer un signal auxdits moyens de commande de largeur d'impulsion qui est un modulateur de largeur d'impulsion (7) agencé pour commander le cycle de service dudit rupteur (71) de telle façon que le cycle de service du rupteur varie pour supprimer le couple nécessaire pour l'entraînement du générateur lors d'accélération dudit véhicule.

6. Appareil de commande selon l'une quelconque des revendications précédentes, dans lequel il est prévu un circuit de commande sensible à la charge (15) qui inclut un détecteur de charge électrique agencé pour déterminer le courant demandé par la charge et des moyens pour appliquer la valeur exigée de courant ($I_{fc}$, Figures 15, 16) comme signal du type en escalier.

7. Appareil de commande selon l'une quelconque des revendications précédentes en combinaison avec un détecteur de cliquetis de moteur, dans lequel ledit appareil est agencé pour commander le cycle de service dudit rupteur (71) pour réduire le couple nécessaire pour l'entraînement du bobinage de champ quand un cliquetis est détecté.

8. Appareil de commande selon la revendication 7 dans lequel le courant de champ est coupé pour arrêter la génération d'énergie lors d'un signal de sortie de cliquetis important issu dudit détecteur de cliquetis.

9. Appareil de commande selon l'une quelconque des revendications précédentes, dans lequel lesdits moyens de commande de largeur d'impulsion (7) incluent un moyen de stockage ($C_2$) pour stocker la valeur des moyens de commande de largeur d'impulsion à l'état "passant" et pour appliquer ladite valeur à l'état "passant" comme signal de sortie desdits moyens de commande de largeur d'impulsion (7) au rupteur (71) quand le rupteur est initialement dans l'état "coupé".

10. Appareil de commande selon la revendication 1 dans lequel la valeur maximale de courant dans le bobinage de champ est déterminé par des moyens réactifs (14-16) et des moyens (13) pour déterminer la charge électrique reliée à l'accumulateur, l'énergie de sortie du générateur étant commandé en commandant le courant du bobinage de champ de telle façon que la tension réelle de l'accumulateur ($V_{Bd}$) est maintenue à l'intérieur d'une plage prédéterminée de tension.

11. Appareil de commande selon la revendication 1 qui inclut une commande des gaz du véhicule, des moyens de détection pour déterminer le degré d'ouverture de la commande des gaz et agencés pour fournir un signal pour commander le générateur de façon à rendre essentiellement à zéro l'énergie de sortie dudit générateur quand la commande des gaz est pleinement ouverte.

12. Appareil de commande selon la revendication 1, dans lequel des moyens sont prévus pour détecter la pression dans la tubulure d'admission du véhicule pour que la capacité de génération d'énergie du générateur soit commandée à une valeur essentiellement zéro quand la pression dans la tubulure d'admission est plus faible qu'une valeur prédéterminée, indiquant ainsi une condition à charge importante.

13. Appareil de commande selon l'une quelconque des revendications précédentes, dans lequel des moyens (210) sont prévus pour détecter la vitesse en rotation du moteur, pour que quand ladite vitesse est réduite en dessous d'une vitesse prédéterminée la génération d'énergie est réduite lors d'une augmentation de la charge électrique sur le générateur.

14. Appareil de commande selon l'une quelconque des revendications précédentes, dans lequel des moyens (211) sont prévus pour générer un avertissement quand la capacité de génération d'énergie est pilotée à une valeur essentiellement zéro.

15. Appareil de commande selon la revendication 14, dans lequel lesdits moyens pour générer un avertissement comportent un voyant qui fonctionne en clignotant à des taux différents en fonction des causes différentes de l'avertissement.

16. Générateur électrique comportant un appareil de commande selon l'une quelconque des revendications précédentes.

**FIELD CURRENT COMMAND VALUE GENERATION CIRCUIT A**

**FIELD WINDING CURRENT SUPPLY C**

BATTERY SET VOLTAGE $V_{BC}$

$\varepsilon_2$

**VOLTAGE CURRENT COMMAND VALUE CONVERSION CIRCUIT** 11 — $I_{f1}$

**CHANGE-OVER CIRCUIT** 17

$\varepsilon_1$

**PWM** 7 — $I_{CH}$

12

GENERATOR REVOLUTION NUMBER $N_G$

**INITIAL EXCITATION CIRCUIT** 14 — $I_{f2}$

$I_{f0}$

$I_{ff}$

**FIELD CURRENT DETECTION CIRCUIT**

2a 2

8

LOAD DETECTION L

**LOAD RESPONSE CONTROL CIRCUIT** 15 — $I_{f3}$

9

**FIELD CURRENT SIGNAL GENERATION MEANS B**

**TEMPERATURE DETECTION CIRCUIT** 16 — $I_{f4}$

**AC LOAD** 103

$I_0$

102a 102b 102c

1

3

SWITCH GROUP

101c

$V_{Bd}$ **VOLTAGE DETECTING CIRCUIT** 13

6

101a 101b

104

**AUTOMOBILE ENGINE**

D.C. LOAD GROUP

**Fig.1**

EP 0 438 884 B1

17

Fig.2A

Fig.2B

Fig.3

Fig.4

Fig.5

Fig.7

20

Fig.6

## Fig.8

PWM
eo

$I_{CH}$

$I_f$

0

0

DETECTED
VOLTAGE
$V_{ff}(I_{ff})$

## Fig.9

$V_{ff}$

$I_f$

## Fig.10

$I_f$

FIELD CURRENT

CURRENT COMMAND $I_{f0}$

## Fig.11

CURRENT COMMAND $I_{f0}$

t

CURRENT $I_f$

t

## Fig.12

DRIVING TORQUE

AT COOL TEMPERATURE

AT HIGH TEMPERATURE

GENERATOR REVOLUTION NUMBER(R.P.M)

## Fig.13

DRIVING TORQUE

AT COOL TEMPERATURE

AT HIGH TEMPERATURE

GENERATOR REVOLUTION NUMBER(R.P.M)

Fig.14(a)

Fig.14(b)

Fig.15

Fig.16

## Fig.17

N

ENGINE REVOLUTION NUMBER(r/min)

800

700

650

615

600

500

500

30% BYPASSING AIR AMOUNT

0% BYPASSING AIR AMOUNT

0        0.25        0.5(kg—m)

GENERATOR DRIVING TORQUE T

## Fig.18

N

ENGINE REVOLUTION NUMBER(r/min)

700

600

500

WITH LOAD RESPONSE CONTROL

WITH NO LOAD RESPONSE CONTROL

0        1        2  TIME(sec)

## Fig.19

GENERATOR REVOLUTION NUMBER

500rpm

1000rpm

CHARGE LAMP

LIT

EXTINGUISHED

$(N_1)$        $(N_2)$

Fig.20

Fig.21

Fig.22

26

EP 0 438 884 B1

GATE VOLTAGE $V_G$

LIT
0.25s
8s
3s

CHARGE LAMP
(FLICKERING)

0.25s

EXTINGUISHED

**Fig.23**

Fig.24(1)  POWER GENERATION STOP $FET_1$ DISCONNECTION WINDING DISCONNECTION — LIGHT ON

Fig.24(2)  OVER VOLTAGE — LIGHT ON / LIGHT OFF

Fig.24(3)  B TERMINAL OPEN

Fig.24(4)  S TERMINAL OPEN

Fig.24(5)  OVER VOLTAGE +B TERMINAL OPEN

Fig.24(6)  OVER VOLTAGE +S TERMINAL OPEN

Fig.24(7)  B TERMINAL OPEN +S TERMINAL OPEN

Fig.24(8)  OVER VOLTAGE +B TERMINAL OPEN +S TERMINAL OPEN

0.25 SECOND

27

Fig.25(a)

100%  1 ─────────────────────
 ↓    0 ─

Fig.25(b)

50%   1 ────────┐    ┌──────
 ↓    0         └────┘

Fig.25(c)

25%   1 ───┐  ┌─────┐   ┌──
 ↓    0    └──┘     └───┘

Fig.25(d)

0%    0 ─────────────────────

(POWER GENERATION CUT)

(V)

Vs

50% DUTY

EXTERNAL LOAD LINE

HATCHED AREA =
MAXIMUM OUTPUT(W)

100% DUTY

I₀

ALTERNATOR OUTPUT
CURRENT(A)

Fig.26

28

Fig.27

Fig.28

START

INITIALIZING
REGISTER — 290

DETECTION OF
INPUT SIGNAL — 291

OUTPUT CALCULATION
IGNITION SYSTEM
FUEL SYSTEM — 292
EXHAUST SYSTEM

Fig.29

INTAKE
PRESENT — 293
$<P_a$? — YES

NO

THROTTLE
FULLY — 294
OPEN? — YES

NO

HEAVY
KNOCK — 295
EXISTS? — YES

NO

LIGHT
KNOCK — 296
EXISTS? — YES — 299

NO

297 — ENGINE
REVOLUTION
NUMBER — YES — 310 LOAD
VARIATION
$\leqslant$1500 r/min — AMOUNT
CALCULATION

$I_{fmax}$=2A

NO

298 — 311 — OPTIMUM FIELD
$I_{fmax}$
CALCULATION — 312

$I_{fmax}$=4.5A — $I_{fmax}$= 0A